Europäisches Patentamt

European Patent Office

Office européen des brevets

(11) Numéro de publication : **0 335 802 B1**

(12) **FASCICULE DE BREVET EUROPEEN**

(45) Date de publication du fascicule du brevet :
06.05.92 Bulletin 92/19

(51) Int. Cl.⁵ : **F16L 1/12**

(21) Numéro de dépôt : **89400897.8**

(22) Date de dépôt : **31.03.89**

(54) **Dispositif de contrôle de la pose sous une grande profondeur d'eau d'un câble ou d'une tuyauterie flexible.**

(30) Priorité : **31.03.88 FR 8804303**

(43) Date de publication de la demande :
**04.10.89 Bulletin 89/40**

(45) Mention de la délivrance du brevet :
**06.05.92 Bulletin 92/19**

(84) Etats contractants désignés :
**AT BE CH DE ES FR GB IT LI NL SE**

(56) Documents cités :
**DE-B- 2 252 838
FR-A- 2 186 989
FR-A- 2 353 002**

(73) Titulaire : **ALCATEL CABLE
30, rue des Chasses
F-92111 Clichy Cédex (FR)**

(72) Inventeur : **Bruneval, Gilles
145, route de Gravelines
F-59279 Loon Plage (FR)**

(74) Mandataire : **Weinmiller, Jürgen et al
Lennéstrasse 9 Postfach 24
W-8133 Feldafing (DE)**

EP 0 335 802 B1

## Description

La présente invention concerne un dispositif de contrôle de la pose sous une grande profondeur d'eau d'un câble ou d'une tuyauterie flexible, notamment d'un câble de transport d'énergie électrique ou d'une tuyauterie pour transport de pétrole ou de gaz naturel.

On sait que, lors de la pose d'un câble sous-marin, il peut apparaître des tensions excessives, susceptibles de l'endommager ou même de le rompre. A l'inverse, si la tension devient insuffisante, le câble peut former une boucle près du fond. Il est connu, pour contrôler l'opération de pose, de vérifier la tension du câble au départ du navire de pose ou l'angle sous lequel il pénétre dans l'eau. Mais la tension que l'on mesure au départ du navire dépend essentiellement du poids de la longueur de câble suspendue au navire. Elle dépend très peu de la tension du câble au fond de l'eau. De même, la mesure de l'angle d'immersion ne donne une indication utilisable que pour des profondeurs relativement faibles, de quelques centaines de mètres.

Or, la pose de câbles sous-marins s'effectue couramment à des profondeurs de plusieurs milliers de mètres pour lesquelles la tension du câble au départ du navire ou son angle d'immersion ne donne aucune indication valable de la tension du câble au fond de l'eau. Ce problème est particulièrement grave pour les câbles de transport d'énergie pour lesquels il est essentiel que le câble repose sur le fond marin en y étant soumis à une certaine tension, contrairement aux câbles de télécommunication qui sont posés le plus souvent avec un excès de longueur.

On a déjà proposé dans le document US-A-4 037 189 un dispositif de mesure du profil d'une tuyauterie sous-marine flexible au cours de sa pose, comprenant trois émetteurs de signaux acoustiques, non en ligne droite, disposés sur le navire de pose ou sur la tuyauterie, et des récepteurs acoustiques répartis en des points espacés sur la tuyauterie, permettant de déterminer les différentes distances entre les émetteurs et les récepteurs acoustiques. Un tel dispositif est cependant complexe et coûteux.

On a aussi proposé dans le document US-A-4 388 710 un dispositif de contrôle de la tension d'un câble sous-marin lors de sa pose, comprenant des émetteurs acoustiques disposés à peu de distance du fond, des émetteurs acoustiques répartis le long du câble en cours de pose et reliés à des jauges de mesure de sa tension, et des récepteurs acoustiques disposés sur un navire auxiliaire. Un tel dispositif est également complexe et coûteux.

On a également proposé dans le document DE-B- 2 252 838, un dispositif pour relever la déformation d'un tube pétrolier immergé au cours de sa pose. Ce dispositif comporte une structure en forme de roue, entourant le tube et glissant sous l'effet de son poids le long du tube, sur laquelle sont fixés des moyens de mesure, de la profondeur et/ou de l'inclinaison du tube ainsi qu'une roue de frottement permettant de déterminer la distance parcourue par la structure le long du tube. La structure descend tout le long du tube jusqu'au voisinage du fond, puis est remontée à l'aide d'un treuil. Son glissement est réglé par ce treuil.

Ces dispositions ne permettent pas des mesures très précises des conditions de pose et peuvent accentuer une éventuelle inclinaison déjà trop importante prise par l'élément immergé en cours de pose.

La présente invention a pour but de procurer un dispositif de contrôle de la pose sous une grande profondeur d'eau d'un câble ou d'une tuyauterie flexible, qui permette de suivre avec une plus grande précision la courbe que forme le câble entre le navire et le fond, et de déceler toute modification des conditions de pose susceptible de l'endommager, tout en restant simple et peu coûteux.

Le dispositif comporte un fourreau enfilé sur le câble ou la tuyauterie flexible et muni de moyens de glissement le long de celui-ci et de moyens de mesure de variables liées à la position du fourreau et de transmission de leurs valeurs, et est caractérisé en ce qu'il comporte en outre des moyens à flottabilité positive reliés mécaniquement au fourreau, une chaînette auxiliaire suspendue à ce dernier et s'étendant au moins jusqu'au fond, la masse par unité de longueur de la chaînette, et les masses et volumes du fourreau et des moyens de flottabilité positive étant tels que le fourreau se maintienne autour de la partie du câble qui est située à une hauteur sensiblement constante au-dessus du fond, ladite hauteur étant relativement faible par rapport à la profondeur du fond.

Bien entendu, la longueur totale de la chaînette doit être supérieure à ladite hauteur. Le choix de la hauteur au-dessus du fond détermine l'angle formé par le fourreau avec la verticale. Si cet angle est faible, il varie peu avec la tension appliquée au câble. Si l'angle est grand, c'est-à-dire si la hauteur est très faible, les variations de tension engendrent des variations plus importantes de l'angle mais le fourreau coulisse moins facilement le long du câble. L'expérience montre qu'une valeur de l'ordre de 45° est un bon compromis.

Il répond en outre de préférence à au moins l'une des caractéristiques suivantes :

– Les moyens de mesure se rapportent à au moins l'une des variables inclinaison du fourreau par rapport à la verticale, profondeur, distance par rapport à la verticale du point du navire d'où le câble ou la tuyauterie flexible plongent dans l'eau.

– Les moyens à flottabilité positive sont constitués par une batterie de sphères creuses solidarisées entres elles.

– Les moyens à flottabilité positive sont constitués par une mousse résistante à la pression à sa profondeur d'immersion.

– La masse par unité de longueur de la chaînette et les masses et volumes du fourreau et des moyens à flottabilité positive rapportés à la tension imprimée au câble ou à la tuyauterie par l'opération de pose, sont tels que l'angle du fourreau par rapport à la verticale soit voisin de 45°, comme indiqué ci-dessus.

Il est décrit ci-après, à titre d'exemple et en référence aux figures du dessin annexé, un dispositif de contrôle de la pose d'un câble sous-marin d'énergie selon l'invention.

La figure 1 représente à grande échelle le dispositif de contrôle associé au câble à une distance relativement faible du fond marin.

La figure 2 représente l'ensemble du câble en cours de pose à partir du navire.

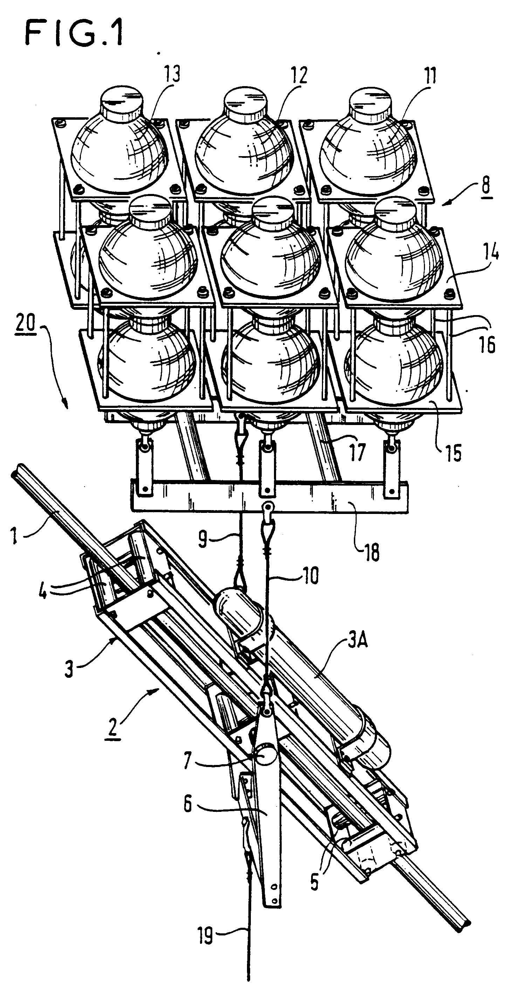

Dans la figure 1, le fourreau de contrôle 2 est monté avec possibilité de glissement sur le câble 1. Il comporte un fourreau en forme de parallélépipède rectangle 3, muni à ses extrémités supérieure et inférieure et en son milieu de rouleaux tels que 4, 5 facilitant son glissement le long du câble. Sur ce cadre est fixé un organe de mesures 3A associé à un émetteur acoustique. Cet organe mesure notamment l'angle du câble avec la verticale à la profondeur à laquelle il se trouve, la pression ambiante et par suite cette profondeur, et la distance au navire par réception d'une onde acoustique émise par celui-ci. Ces données sont transmises par un émetteur acoustique en relation avec un récepteur à bord du navire câblier. Un étrier 6 est susceptible de pivoter par rapport au cadre autour de paliers tels que 7. Le flotteur 8 est relié à l'étrier 6 par des fils métalliques 9, 10. Il se compose de sphères en verre épais telles que 11, 12, 13, immobilisées dans des plaques 14, 15 reliées par les tirants 16. L'ensemble des sphères est maintenu en position fixe par un jeu de poutrelles perpendiculaires 17, 18.

Par ailleurs, une chaînette 19, fixée à la traverse de l'étrier 6, s'étend jusqu'au fond sous-marin sur lequel elle repose par une certaine longueur.

Le fourreau se place le long du câble de façon que la poussée vers le haut exercée par l'eau sur l'ensemble du dispositif équilibre le poids de ce dispositif et de la portion de chaînette s'étendant jusqu'au fond qui lui est suspendue.

Le volume des sphères du flotteur et le poids au mètre de la chaînette sont calculés pour que le fourreau se maintienne un peu au-dessus du fond, par exemple à 100 m au-dessus de lui, la longueur de la chaînette étant évidemment supérieure à 100 mètres.

Le flotteur à système de sphères peut éventuellement être remplacé par un flotteur en mousse de résine polymère munie de billes incorporées assurant sa résistance à la pression ambiante.

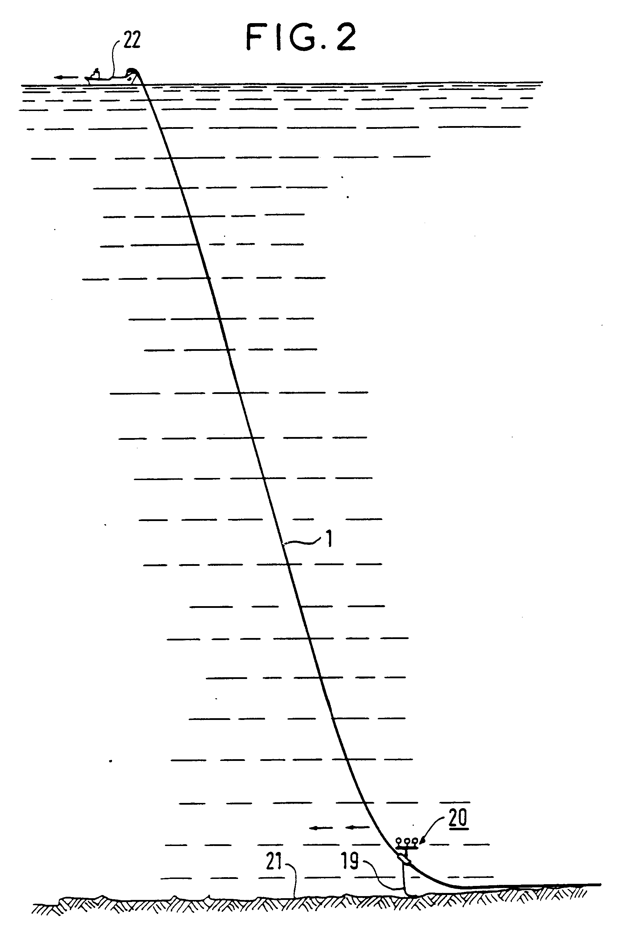

Dans la figure 2, le dispositif de contrôle est représenté globalement schématiquement par le repère 20. Il est disposé sur le câble 1 à une faible hauteur au-dessus du fond 21, de l'ordre d'une centaine de mètres.

Le câble 1 part du navire de surface 22, en prenant comme on le sait approximativement la forme d'une courbe en chaînette. La flèche liée au repère indique la direction d'avance de la pose.

On comprendra que si un obstacle sur le fond sous-marin ou la formation d'une boucle sur le câble à proximité de celui-ci vient à augmenter la tension du câble, l'angle avec la verticale du fourreau vient à augmenter. Cette variation de l'angle, transmise au navire de surface, permet de détecter et de remédier à un tel incident avant tout dommage au câble.

## Revendications

1. Dispositif de contrôle de la pose sous une grande profondeur d'eau d'un câble ou d'une tuyauterie flexible (1) à partir d'un navire (22), comportant un fourreau (2) enfilé sur le câble ou la tuyauterie flexible et muni de moyens (4) de glissement le long de celui-ci (1) et de moyens (3A) de mesure de variables liées à la position du fourreau et de transmission de leurs valeurs, caractérisé en ce qu'il comporte, en outre, des moyens (8) à flottabilité positive reliés mécaniquement au fourreau, une chaînette auxiliaire (19) suspendue à ce dernier et s'étendant jusqu'au fond, la masse par unité de longueur de la chaînette, et les masses et volumes du fourreau, et des moyens de flottabilité positive étant tels que le fourreau se maintienne autour de la partie du câble gui est située à une hauteur sensiblement constante au-dessus du fond (21), ladite hauteur étant relativement faible par rapport à la profondeur du fond.

2. Dispositif selon la revendication 1, caractérisé en ce que les moyens de mesure (3A) se rapportent à au moins l'une des variables inclinaison du fourreau par rapport à la verticale, profondeur, distance par rapport à la verticale du point du navire d'où le câble ou la tuyauterie flexible plongent dans l'eau.

3. Dispositif selon les revendications 1 ou 2, caractérisé en ce que les moyens à flottabilité positive (8) sont constitués par une batterie de sphères creuses (11, 12, 13) solidarisées entre elles.

4. Dispositif selon les revendications 1 ou 2, caractérisé en ce que les moyens à flottabilité positive sont constitués par une mousse résistante à la pression à sa profondeur d'immersion.

5. Dispositif selon l'une des revendications 1 à 4, caractérisé en ce que la masse par unité de longueur de la chaînette et les masses et volumes du fourreau (2) et des moyens à flottabilité positive (8), rapportés à la tension imprimée au câble ou à la tuyauterie par l'opération de pose, sont tels que l'angle du fourreau par rapport à la verticale soit voisin de 45°.

**Patentansprüche**

1. Vorrichtung zur Steuerung des Verlegens eines Kabels oder einer flexiblen Rohrleitung (1) in großer Wassertiefe von einem Schiff (22) aus, mit einer Manschette (2), die über das Kabel oder die flexible Rohrleitung geschoben ist und mit Mitteln (4), die deren Gleiten entlang der Rohrleitung oder des Kabels ermöglichen, sowie mit Mitteln (3A) zum Messen von mit der Position der Manschette verbundenen Variablen und zur Übertragung von deren Werten, dadurch gekennzeichnet, daß die Vorrichtung weiter positive Auftriebsmittel (8), die mechanisch mit der Manschette verbunden sind, und eine Hilfskette (19) aufweist, die an der Manschette aufgehängt ist und sich bis zum Boden erstreckt, wobei die Masse der Kette je Längeneinheit und die Massen und Volumina der Manschette und der positiven Auftriebsmittel so bemessen sind, daß sich die Manschette um jenen Abschnitt des Kabels hält, der sich in im wesentlichen konstanter Höhe über dem Boden (21) befindet, wobei die Höhe relativ gering im Vergleich zur Tiefe des Meeresbodens ist.

2. Vorrichtung nach Anspruch 1, dadurch gekennzeichnet, daß sich die Meßmittel (3A) mindestens auf eine der folgenden Variablen beziehen, nämlich Neigung der Manschette relativ zur Senkrechten, Tiefe, Abstand relativ zur Senkrechten unter dem Schiff, von dem aus das Kabel oder die flexible Rohrleitung ins Wasser eintaucht.

3. Vorrichtung nach Anspruch 1 oder 2, dadurch gekennzeichnet, daß die positiven Auftriebsmittel (8) aus einer Batterie hohler Kugeln (11, 12, 13) bestehen, die untereinander fest verbunden sind.

4. Vorrichtung nach Anspruch 1 oder 2, dadurch gekennzeichnet, daß die positiven Auftriebsmittel aus Schaumstoff bestehen, der den in seiner Tauchtiefe herrschenden Druck aushält.

5. Vorrichtung nach einem der Ansprüche 1 bis 4, dadurch gekennzeichnet, daß die Masse je Längeneinheit der Kette und die Massen und Volumina der Manschette (2) sowie der positiven Auftriebsmittel (8), bezogen auf die dem Kabel oder der Rohrleitung durch die Verlegungsoperation aufgebrachte Spannung, so bemessen sind, daß der Winkel der Manschette relativ zur Senkrechten nahe bei 45° liegt.

**Claims**

1. An apparatus for monitoring the laying of a deep sea cable or flexible pipeline (1) from a vessel (22), comprising a sleeve (2) threaded on the cable or the flexible pipeline and equipped with means (4) allowing the sleeve to slide along said cable or pipeline and with means (3A) for measuring variables related to the position of the sleeve and for transmitting their values, characterized in that it further includes positive buoancy means (8) which are mechanically connected to the sleeve, an auxiliairy chain (19) suspended from the sleeve and extending at least down to the sea bed, the mass per unit length of the chain and the masses and volumes of the sleeve and of the positive buoancy means being such that the sleeve adjusts itself around that part of the cable which is situated at a substantially constant height above the sea bed (21), said height being relatively small compared with the depth of the sea bed.

2. An apparatus according to claim 1, characterized in that the measuring means (3A) relate to at least one of the following variables: inclination of said sleeve with respect to the vertical; depth; and horizontal distance from the vessel from which the cable or flexible pipeline enters the sea.

3. An apparatus according to claim 1 or 2, characterized in that the positive buoancy means (8) are constituted by a set of hollow spheres (11, 12, 13) which are secured to one another.

4. An apparatus according to claim 1 or 2, characterized in that the positive buoancy means are constituted by a synthetic foam which withstands the pressure at the depth at which it is immersed.

5. An apparatus according to any one of claims 1 to 4, characterized in that the mass per unit length of the chain and the masses and volumes of the sleeve (2) and of the positive buoancy means (8) are such that, relative to the tension exerted on the cable or flexible pipeline by the laying operation, the angle of the sleeve with respect to the vertical is about 45°.

# FIG.1

# FIG. 2